# EUROPEAN PATENT APPLICATION

(11) **EP 4 471 352 A1**
(43) Date of publication of application: **04.12.2024**
(21) Application number: 23905644.3
(22) Date of filing: 28.11.2023
(51) Int. Cl.: F24S 20/40, F24S 20/50, F24D 11/02

(54) **SOLAR HEATING DEVICE SUITABLE FOR ULTRALOW-TEMPERATURE ENVIRONMENT**

(30) Priority: 20.12.2022 CN 202211642437; 20.12.2022 CN 202223418113 U
(71) Applicant: SHANGHAI INVESTIGATION, DESIGN & RESEARCH INSTITUTE CO., LTD., Shanghai 200434 (CN)
(72) Inventor: PENG, Shuying, Shanghai 200434 (CN); NI, Dan, Shanghai 200434 (CN); WU, Bolun, Shanghai 200434 (CN)
(74) Representative: Canzler & Bergmeier Patentanwälte Partnerschaft mbB
(86) International application number: PCT/CN2023/134643
(87) International publication number: WO 2024/131477

(57) **Abstract**

The present application provides a solar heating device suitable for an ultralow-temperature environment. The device comprises a heat insulation shell; a solar collector plate is arranged outside the heat insulation shell, and a heat storage water tank, a heat exchanger, an end-user supply system, a double-heat-source heat pump-assisting heat supply system and a control cabinet are arranged inside the heat insulation shell. A first inlet of the heat storage water tank is communicated with a water supply pipe of the solar collector plate; a first outlet of the heat storage water tank is communicated with a water return pipe of the solar collector plate by means of a heat collection circulating pump; the end-user supply system takes water from a second outlet of the heat storage water tank, heat exchange is performed by means of the heat exchanger, a first circulating water pump conveys water conforming to a water supply temperature to an end user, and water retuned to the end-user supply system is guided to an inlet of the heat exchanger; an outlet of the double-heat-source heat pump-assisting heat supply system is connected to a user water supply pipeline, and an inlet of the double-heat-source heat pump-assisting heat supply system is connected to a user water return pipeline; double-heat-source heat pump-assisting heat supply is started to operate when the water temperature at the user side is insufficient; the control cabinet is communicationally connected to the heat storage water tank, the heat exchanger, the end-user supply system and the double-heat-source heat pump-assisting heat supply system.

## Description

### FIELD OF THE INVENTION

The present disclosure relates to the technical field of clean energy heating, and in particular, to a solar-powered heating device for an ultra-low temperature environment.

### BACKGROUND OF THE INVENTION

Most of the northwestern regions of China are characterized by severe cold and frigid climates, with low outdoor temperatures in winter and long heating periods. In rural areas, economic constraints and the lack of energy-efficient building design standards result in poor thermal performance and high energy consumption in residential buildings, leading to uncomfortable indoor environments.

As the economy grows and people demand better indoor thermal conditions, the energy consumption of buildings is becoming a larger concern, especially in rural areas. The northwest regions have abundant solar energy resources, offering significant potential for energy savings in rural homes. However, due to the extremely low outdoor temperatures, relying solely on solar heating would require excessively large collector areas and high initial investments, making it impractical for rural residential heating.

Developing a heating system that improves the thermal performance of residential buildings, enhances energy efficiency, and reduces heating costs has become a crucial topic of exploration for rural heating in the northwest.

### SUMMARY OF THE INVENTION

The present disclosure provides a solar-powered heating device for an ultra-low temperature environment, which improves the thermal performance of residential buildings, enhances energy efficiency, and reduces heating costs.

The solar-powered heating device comprises a heat insulation shell. At least one solar heat-collecting panel is disposed outside the heat insulation shell, and a heated-liquid storage tank, a heat exchanger, a terminal supply system, a dual-heat-source heat pump auxiliary heating system, and a control cabinet are disposed within the heat insulation shell.

A first inlet of the heated-liquid storage tank is connected to a liquid-supplying pipe of the solar heat-collecting panel, and a first outlet of the heated-liquid storage tank is connected to a liquid-returning pipe of the solar heat-collecting panel through a heat collection circulating pump.

The terminal supply system takes liquid from a second outlet of the heated-liquid storage tank, adjusts a temperature of the liquid, through the heat exchanger, to obtain temperature-compliant liquid, and transmits the temperature-compliant liquid to a user side through a first liquid-circulating pump, and a liquid-returning pipe of the terminal supply system is connected to an inlet of the heat exchanger.

An outlet of the dual-heat-source heat pump auxiliary heating system is connected to a liquid-supplying pipe on the user side, and an inlet of the dual-heat-source heat pump auxiliary heating system is connected to a liquid-returning pipe on the user side. The dual-heat-source heat pump auxiliary heating system is configured to be activated when a temperature of the temperature-compliant liquid on the user side falls below a preset value.

The control cabinet is communicatively connected to the heated-liquid storage tank, the heat exchanger, the terminal supply system, and the dual-heat-source heat pump auxiliary heating system, respectively.

In one embodiment, the dual-heat-source heat pump auxiliary heating system comprises a compressor, a condenser, an expansion valve, a filter, a three-way valve, an air-cooled evaporator, and a water-cooled evaporator.

The compressor, the condenser, the expansion valve, the filter, the three-way valve, and the air-cooled evaporator constitute a low-temperature air source heat pump.

The compressor, the condenser, the expansion valve, the filter, the three-way valve, and the water-cooled evaporator constitute a water source heat pump.

Outlets of the low-temperature air source heat pump and the water source heat pump are connected to a first end of a liquid-supplying pipe of the dual-heat-source heat pump auxiliary heating system through a first electric control valve, and a second end of the liquid-supplying pipe of the dual-heat-source heat pump auxiliary heating system is provided with a terminal liquid-supplying interface. Inlets of the low-temperature air source heat pump and the water source heat pump are connected to a liquid outlet of the heat exchanger through a second liquid-circulating pump, and a liquid-returning pipe of the heat exchanger is connected to a terminal liquid-returning interface through a second electric control valve. The terminal liquid-supplying interface and the terminal liquid-returning interface are connected to the user side.

The three-way valve is configured to switch between the air-cooled evaporator and the water-cooled evaporator. When the temperature of the liquid stored in the heated-liquid storage tank is at a first range, the three-way valve is switched to the water-cooled evaporator. When the temperature of the liquid stored in the heated-liquid storage tank is at a second range, the three-way valve is switched to the air-cooled evaporator. A maximum value of the second range is less than a minimum value of the first range.

In one embodiment, the solar-powered heating device further comprises a first constant-pressure liquid-supplementing device and a second constant-pressure liquid-supplementing device.

An inlet of the first constant-pressure liquid-supplementing device is connected to a first end of a first liquid-supplementing pipe, and an outlet of the first constant-pressure liquid-supplementing device is connected to an inlet of the first liquid-circulating pump.

An inlet of the second constant-pressure liquid-supplementing device is connected to a first end of a second liquid-supplementing pipe, and an outlet of the second constant-pressure liquid-supplementing device is connected to an inlet of the second liquid-circulating pump.

In one embodiment, a water flow sensor is disposed at an inlet pipe of the dual-heat-source heat pump auxiliary heating system, to detect whether the inlets of the low-temperature air source heat pump and the water source heat pump lack water.

In one embodiment, each of the inlets and outlets of the first liquid-circulating pump and the second liquid-circulating pump is provided with a shock-absorbing soft joint. Each of the outlets of the first liquid-circulating pump and the second liquid-circulating pump is provided with a check valve or a silent one-way valve.

In one embodiment, liquid in the solar heat-collecting panel is heated to be high-temperature liquid and enters the heated-liquid storage tank through the liquid-supplying pipe of the solar heat-collecting panel. The liquid stored in the heated-liquid storage tank is ethylene glycol solution. The temperature of the liquid stored in the heated-liquid storage tank varies between 20 and 85 degrees.

In one embodiment, the solar-powered heating device further comprises a base. The base has a frame structure formed by welding channel steel or I-shaped steel. The base has fixing points corresponding to the heat insulation shell, the heated-liquid storage tank, the heat exchanger, the terminal supply system, the dual-heat-source heat pump auxiliary heating system, and the control cabinet, respectively. Each of the fixing points is provided with a mounting hole, through which a cross beam is fixed to the base.

In one embodiment, the heat insulation shell has an assembled frame structure and is detachably mounted on the base.

In one embodiment, the heat insulation shell is formed by assembling finished color steel plates having internal polyurethane foaming structure, and a back panel of the heat insulation shell is provided with a sealed insulated access door.

In one embodiment, the base is rectangular, and a side surface of each of two narrow edges of the base is provided with reinforcement cross beams; wherein two lifting lugs are welded on a top reinforcement cross beam of the reinforcement cross beams on the side surface of each of two narrow edges, to balance an overall hoisting weight of the heat insulation shell.

Two cross beams are welded at a center of gravity of the solar-powered heating device, along a longitudinal direction of the base, flush with a bottom surface of the base, for forklift loading and unloading.

The solar-powered heating device of the present disclosure has following beneficial effects.
1. The solar-powered heating device of the present disclosure primarily uses solar heat-collecting panels for heat collection, with a dual-heat-source heat pump auxiliary heating system providing supplementary heating, significantly improving energy efficiency and effectively addressing winter heating issues in high-altitude, severely cold rural areas.
2. The solar-powered heating device of the present disclosure is optimized and assembled into an outdoor clean energy heating station, simplifying on-site construction and installation, allowing non-professionals to quickly install it following the manual, significantly reducing installation costs, saving time, and minimizing material waste.
3. The solar-powered heating device of the present disclosure can be configured with standardized components, making it easy to produce a series of products and improve production efficiency; based on the design configuration manual, the device is assembled, tested, and qualified before leaving the factory, ensuring product quality.
4. All equipment and accessories can be quickly disassembled and replaced, making transportation and packaging convenient and after-sales service simple.
5. The solar-powered heating device of the present disclosure supports automated control, operates 24 hours without supervision, provides fault alarm analysis, and has low operating costs; it also includes a remote control interface, optimizing the configuration to improve heating comfort for rural residents and save energy, facilitating its promotion.

### BRIEF DESCRIPTION OF DRAWINGS

In order to more clearly illustrate the technical solutions in the embodiments of the present disclosure, the following is a brief description of the accompanying drawings to be used in the description of the embodiments, the following description of the accompanying drawings are only some embodiments of the present invention, for the person of ordinary skill in the art, without creative work, other drawings can be obtained according to these accompanying drawings.
FIG. 1 is a schematic structural diagram of a solar-powered heating device for an ultra-low temperature environment according to an embodiment of the present disclosure.
FIG. 2 is a schematic process diagram of a solar-powered heating device for an ultra-low temperature environment according to an embodiment of the present disclosure.

### DETAILED DESCRIPTION OF THE INVENTION

In order to make the inventive purpose, technical solutions and beneficial technical effects of the present disclosure clearer, the technical solutions in the embodiments of the present disclosure will be described clearly and completely below with reference to the drawings. The described embodiments are only part of all embodiments of the present disclosure. The components of the embodiments described and illustrated in the accompanying drawings may be arranged and designed in various configurations.

Therefore, the detailed description of the embodiments provided herein is not intended to restrict the scope of the claims of the present disclosure but merely represents selected embodiments. All other embodiments that persons of ordinary skill in the art obtain without creative efforts based on the embodiments of the present disclosure also fall within the scope of the present disclosure.

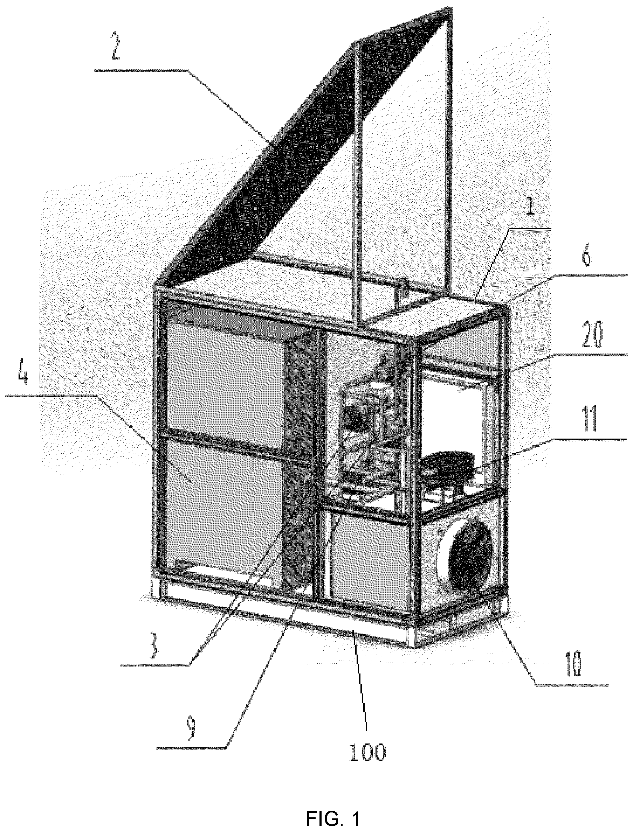

FIG. 1 shows a schematic structural diagram of a solar-powered heating device for an ultra-low temperature environment according to an embodiment of the present disclosure. Referring to FIG. 1, the solar-powered heating device comprises a heat insulation shell 1.

At least one solar heat-collecting panel 2 is disposed outside the heat insulation shell 1. The solar heat-collecting panel 2 is disposed at a top portion of the heat insulation shell 1 and is installed horizontally or obliquely at a certain angle. It should be noted that the installation position of the solar heat-collecting panel 2 can be adjusted based on actual conditions. For example, the solar heat-collecting panel 2 can be placed on the side of the heat insulation shell 1 or any other location that receives sunlight. Any position on the heat insulation shell 1 that can effectively increase the solar collection area is suitable for installing the solar heat-collecting panel 2.

A heated-liquid storage tank 4, a heat exchanger 7, a terminal supply system, a dual-heat-source heat pump auxiliary heating system, and a control cabinet 20 are disposed within the heat insulation shell 1. The control cabinet 20 is communicatively connected to the heated-liquid storage tank 4, the heat exchanger 7, the terminal supply system, and the dual-heat-source heat pump auxiliary heating system, respectively.

A first inlet of the heated-liquid storage tank 4 is connected to a liquid-supplying pipe of the solar heat-collecting panel 2, and a first outlet of the heated-liquid storage tank 4 is connected to a liquid-returning pipe of the solar heat-collecting panel 2 through a heat collection circulating pump 3. The terminal supply system takes liquid from a second outlet of the heated-liquid storage tank 4, adjusts a temperature of the liquid through the heat exchanger 7 to obtain temperature-compliant liquid, and transmits the temperature-compliant liquid to a user side through a first liquid-circulating pump, and a liquid-returning pipe of the terminal supply system is connected to an inlet of the heat exchanger 7. Specifically, liquid in the solar heat-collecting panel 2 is heated to be high-temperature liquid and enters the heated-liquid storage tank 4 through the liquid-supplying pipe of the solar heat-collecting panel 2. The liquid stored in the heated-liquid storage tank 4 absorbs heat from the liquid flowing from the solar heat-collecting panel 2 and becomes heated liquid. The heated liquid then transfers heat to a liquid-returning pipe of the terminal supply system through the heat exchanger 7. The liquid stored in the terminal supply system (i.e., the liquid stored in the liquid-returning pipe of the terminal supply system) absorbs heat to become the temperature-compliant liquid, and then the temperature-compliant liquid is transmitted to the user side through the first liquid-circulating pump.

The solar heat-collecting panel 2 primarily operates in daytime. On cloudy days or in nighttime, when a temperature of the liquid stored in the heated-liquid storage tank 4 drops after short-term heat storage, the dual-heat-source heat pump auxiliary heating system starts working. An outlet of the dual-heat-source heat pump auxiliary heating system is connected to a liquid-supplying pipe on the user side, and an inlet of the dual-heat-source heat pump auxiliary heating system is connected to a liquid-returning pipe on the user side. The dual-heat-source heat pump auxiliary heating system is activated when a temperature of the temperature-compliant liquid on the user side falls below a preset value.

As described above, the solar-powered heating device of the present disclosure primarily uses the solar heat-collecting panel 2 for heat collection, with the dual-heat-source heat pump auxiliary heating system providing supplementary heating, that is, the solar heat-collecting panel 2 operates in daytime, and the heated-liquid storage tank 4 provides short-term heat storage on cloudy days or in nighttime, and the dual-heat-source heat pump auxiliary heating system provides supplementary heating, thereby significantly improving energy efficiency and effectively addressing winter heating issues in high-altitude, severely cold rural areas.

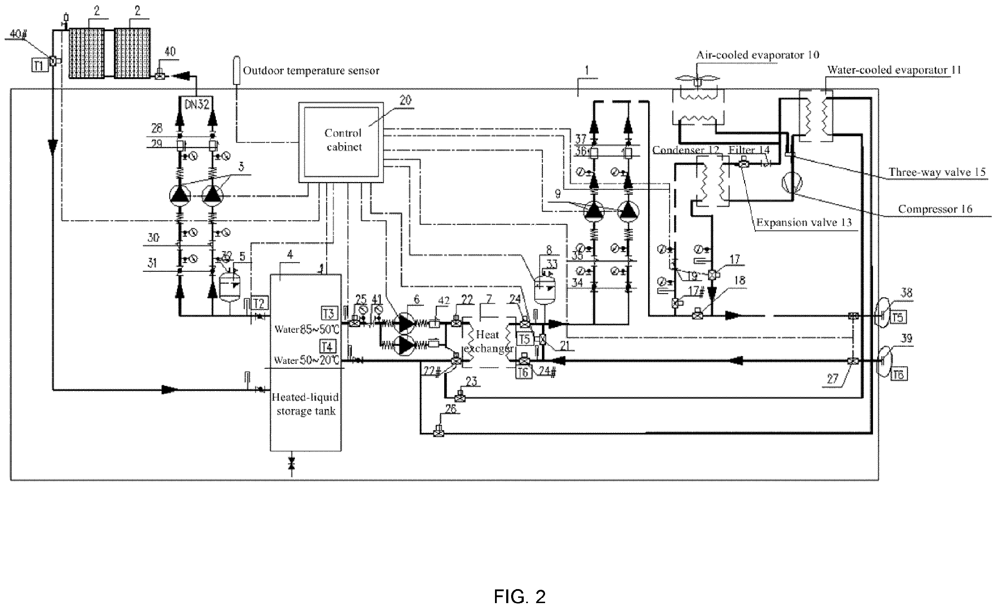

FIG. 2 is a schematic process diagram of the solar-powered heating device according to an embodiment of the present disclosure. Referring to FIG. 2, the solar-powered heating device comprises the heat insulation shell 1, at least one solar heat-collecting panel 2, the heat collection circulating pump 3, the heated-liquid storage tank 4, a first pressure tank 5, a first liquid-circulating pump 6, the heat exchanger 7, a second pressure tank 8, a second liquid-circulating pump 9, an air-cooled evaporator 10, a water-cooled evaporator 11, a condenser 12, an expansion valve 13, a filter 14, a three-way valve 15, a compressor 16, and the control cabinet 20.

A first end of the liquid-supplying pipe of the solar heat-collecting panel 2 is connected to an outlet of the solar heat-collecting panel 2 through a third electric control valve 40#, and a second end of the liquid-supplying pipe of the solar heat-collecting panel 2 is connected to the first inlet of the heated-liquid storage tank 4. An inlet of the solar heat-collecting panel 2 is connected to a liquid-discharging pipe of the heat collection circulating pump 3 through a fourth electric control valve 40, and an inlet of the heat collection circulating pump 3 is connected to the first outlet of the heated-liquid storage tank 4.

The dual-heat-source heat pump auxiliary heating system comprises the compressor 16, the condenser 12, the expansion valve 13, the filter 14, the three-way valve 15, the air-cooled evaporator 10, and the water-cooled evaporator 11.

The compressor 16, the condenser 12, the expansion valve 13, the filter 14, the three-way valve 15, and the air-cooled evaporator 10 constitute a low-temperature air source heat pump. The compressor 16, the condenser 12, the expansion valve 13, the filter 14, the three-way valve 15, and the water-cooled evaporator 11 constitute a water source heat pump. Outlets of the low-temperature air source heat pump and the water source heat pump are connected to a first end of a liquid-supplying pipe of the dual-heat-source heat pump auxiliary heating system through a first electric control valve 17, and a second end of the liquid-supplying pipe of the dual-heat-source heat pump auxiliary heating system is provided with a terminal liquid-supplying interface 38. Inlets of the low-temperature air source heat pump and the water source heat pump are connected to an outlet of the second liquid-circulating pump 9 through a ball valve 17#, and connected to a liquid outlet of the heat exchanger 7 through the second liquid-circulating pump. A liquid-returning pipe of the heat exchanger 7 is connected to a terminal liquid-returning interface 39 through a second electric control valve 24#. The terminal liquid-supplying interface and the terminal liquid-returning interface are both connected to the user side. The second liquid-circulating pump 9 can be installed on either the liquid-supplying pipe of the dual-heat-source heat pump auxiliary heating system or the liquid-returning pipe of the heat exchanger 7.

The three-way valve 15 can switch between the air-cooled evaporator 10 and the water-cooled evaporator 11. When the temperature of the liquid stored in the heated-liquid storage tank 4 is at a first range, the three-way valve 15 is switched to the water-cooled evaporator 11. When the temperature of the liquid stored in the heated-liquid storage tank 4 is at a second range, the three-way valve 15 is switched to the air-cooled evaporator 10. A maximum value of the second range is less than a minimum value of the first range.

For antifreeze purposes, the liquid stored in the heated-liquid storage tank 4 is ethylene glycol solution. The liquid in the solar heat-collecting panel is first heated to be high-temperature liquid and then enters the heated-liquid storage tank through the liquid-supplying pipe of the solar heat-collecting panel. In one embodiment, the temperature of the liquid stored in the heated-liquid storage tank 4 varies between 20 and 85 degrees. When the temperature of the liquid stored in the heated-liquid storage tank 4 is 50-85 degrees, the first liquid-circulating pump 6 drives the heat exchanger 7 to perform a heat exchange operation, and the temperature-compliant liquid stored in the terminal supply system is transmitted to the user side for use. When the temperature of the liquid stored in the heated-liquid storage tank 4 is 20-50 degrees, the water-cooled evaporator 11 in the water source heat pump is supplied by the second liquid-circulating pump 9, and the water source heat pump starts working. When the temperature of the liquid stored in the heated-liquid storage tank 4 is less than 20 degrees, the low-temperature air source heat pump is supplied by the second liquid-circulating pump 9, and the low-temperature air source heat pump starts working.

Each of the inlets of the low-temperature air source heat pump and the water source heat pump is provided with a filter 19, the inlet of the heat collection circulating pump 3 is provided with a first butterfly valve 31 and a first filter 30. An outlet of the heat collection circulating pump 3 is provided with a first check valve 29, and an outlet of the first check valve 29 is provided with a first butterfly valve 28. An inlet of the first liquid-circulating pump 6 is provided with a fifth electric control valve 25 and a filter 41. An outlet of the first liquid-circulating pump 6 is provided with a check valve 42, and an outlet of the check valve 42 is provided with a sixth electric control valve 22 and a seventh electric control valve 23. An inlet of the second liquid-circulating pump 9 is provided with a second butterfly valve 34 and a second filter 35, an outlet of the second liquid-circulating pump 9 is provided with a second check valve 36, and an outlet of the second check valve 36 is provided with a second butterfly valve 37.

In one embodiment, the solar-powered heating device further comprises a first constant-pressure liquid-supplementing device and a second constant-pressure liquid-supplementing device. An inlet of the first constant-pressure liquid-supplementing device is connected to a first end of a first liquid-supplementing pipe, and an outlet of the first constant-pressure liquid-supplementing device is connected to the inlet of the first liquid-circulating pump 6. An inlet of the second constant-pressure liquid-supplementing device is connected to a first end of a second liquid-supplementing pipe, and an outlet of the second constant-pressure liquid-supplementing device is connected to the inlet of the second liquid-circulating pump 9. In one embodiment, each of the first constant-pressure liquid-supplementing device and the second constant-pressure liquid-supplementing device comprises a pressure tank and a pressure controller. Specifically, the first constant-pressure liquid-supplementing device includes the first pressure tank 5 and a pressure controller, and the second constant-pressure liquid-supplementing device includes the second pressure tank 8 and a pressure controller.

The first end of the first liquid-supplementing pipe is connected to an interface 32 of the first pressure tank 5, and a second end of the first liquid-supplementing pipe is connected to the inlet of the heat collection circulating pump 3. The first end of the second liquid-supplementing pipe is connected to an interface 33 of the second pressure tank 8, and a second end of the second liquid-supplementing pipe is connected to the inlet of the second liquid-circulating pump 9. In one embodiment, the first pressure tank 5 and the second pressure tank 8 may be diaphragm pressure tanks.

In one embodiment, each of the inlets and outlets of the first liquid-circulating pump and the second liquid-circulating pump is provided with a shock-absorbing soft joint. Each of the outlets of the first liquid-circulating pump and the second liquid-circulating pump is provided with a check valve or a silent one-way valve. Each of inlets and outlets of hosts of two heat pumps in the dual-heat-source heat pump auxiliary heating system is provided with an electric ball valve and a metal soft joint, and each of the inlets of the hosts of the two heat pumps in the dual-heat-source heat pump auxiliary heating system is provided with a filter.

In one embodiment, a water flow sensor is disposed at an inlet pipe of the dual-heat-source heat pump auxiliary heating system and is communicatively connected to a control terminal of the host of the low-temperature air source heat pump and a control terminal of the host of the water source heat pump. The water flow sensor monitors the water flow to detect any water shortages at the inlets of the hosts of the low-temperature air source heat pump and the water source heat pump. Since the hosts of the heat pumps can be easily damaged in a water shortage, the water flow sensor helps protect them by ensuring adequate water supply.

In one embodiment, the solar-powered heating device further comprises a base 100. The base 100 has a frame structure formed by welding channel steel or I-shaped steel. The I-shaped steel may include a central vertical plate and two flanges at the top and bottom. The base 100 has fixing points corresponding to the heat insulation shell 1, the heated-liquid storage tank 4, the heat exchanger 7, the terminal supply system, the dual-heat-source heat pump auxiliary heating system, and the control cabinet 20, respectively. Each of the fixing points is provided with a mounting hole, through which a cross beam is fixed to the base 100, making future installation, maintenance, inspection, and replacement more convenient.

Shock absorbers are disposed between the base 100 and each of the heat collection circulating pump 3, the first liquid-circulating pump 6, and the second liquid-circulating pump 9, and between the base 100 and each of the compressor 16 and the air-cooled evaporator 10 in the dual-heat-source heat pump auxiliary heating system, significantly reducing noise and vibration transmission during operation.

The heat insulation shell 1 has an assembled frame structure and is detachably mounted on the base 100. A top and/or a side of the heat insulation shell 1 is provided with cross beams for fixing the solar heat-collecting panel 2, each of which is provided with a mounting hole. The solar heat-collecting panel 2 is installed on-site. The solar heat-collecting panel 2 can be easily assembled and disassembled from the heat insulation shell 1 using bolt components.

Once the heat insulation shell 1 is secured, there is a 5-10 centimeters gap between its overall structure and the base 100, and a height of the solar-powered heating device is controlled within 2.2 meters, facilitating hoisting and transportation.

The heat insulation shell is formed by assembling finished color steel plates having internal polyurethane foaming structure, and a back panel of the heat insulation shell is provided with a sealed insulated access door. Preferably, this door is positioned near the control cabinet 20 for easy access during operation and maintenance.

In one embodiment, the base 100 is rectangular, and a side surface of each of two narrow edges of the base 100 is provided with reinforcement cross beams. Two lifting lugs are welded on a top reinforcement cross beam of the reinforcement cross beams on the side surface of each of two narrow edges, to balance an overall hoisting weight of the heat insulation shell. Two cross beams are welded at a center of gravity of the solar-powered heating device, along a longitudinal direction of the base, flush with a bottom surface of the base 100, facilitating forklift loading and unloading.

In one embodiment, the control cabinet 20, aside from its main power access terminal which has a reserved wiring port for on-site installation, has all other power and control lines, as well as control switches leading to the hosts, the heat collection circulating pump 3, the first liquid-circulating pump 6, and the second liquid-circulating pump 9, fully installed and factory-tested. All pipe components in the solar-powered heating device are optimized and installed according to heating, ventilation, and air conditioning (HVAC) and power electrical standards, with the base 100 designed to meet actual transportation and hoisting specifications.

In the present disclosure, all components and water circuits, including the solar heat-collecting panel 2, the dual-heat-source heat pump auxiliary heating system, the heat collection circulating pump 3, the first liquid-circulating pump 6, the second liquid-circulating pump 9, the first pressure tank 5, the second pressure tank 8, the heated-liquid storage tank 4, and the heat exchanger 7, are designed for quick disassembly and connection through pipes, valves, unions, or flanges, making future replacement and maintenance very convenient.

In one embodiment, the solar-powered heating device of the present disclosure has an integrated electrical control part, which is equipped with a water shortage alarm sensor and a water flow sensor. The control cabinet 20 adopts a computer board and a programmable logic controller (PLC) operation mode, offering a high degree of automation and simple operation, capable of automatic operation, and includes a remote communication interface for remote operation and monitoring.

From the above technical solutions, it can be seen that the solar-powered heating device of the present disclosure primarily uses solar heat-collecting panels for heat collection, with a dual-heat-source heat pump auxiliary heating system providing supplementary heating, significantly improving energy efficiency and effectively addresses winter heating issues in high-altitude, severely cold rural areas.

The solar-powered heating device of the present disclosure further has the following beneficial effects.
1. The solar-powered heating device of the present disclosure is optimized and assembled into an outdoor clean energy heating station, simplifying on-site construction and installation, allowing non-professionals to quickly install it following the manual, significantly reducing installation costs, saving installation time, and minimizing material waste.
2. The solar-powered heating device of the present disclosure can be configured with standardized components, making it easy to produce a series of products and improve production efficiency; based on the design configuration manual, the device is assembled, tested, and qualified before leaving the factory, ensuring product quality.
3. All equipment and accessories can be quickly disassembled and replaced, making transportation and packaging convenient and after-sales service simple.
4. The solar-powered heating device of the present disclosure supports automated control, operates 24 hours without supervision, provides fault alarm analysis, and has low operating costs; it also includes a remote control interface, optimizing the configuration to improve heating comfort for rural residents and save energy, facilitating its promotion.

The above-mentioned embodiments are only preferred embodiments of the present disclosure and are not intended to restrict the present disclosure. Any modification, equivalent replacement, improvement, etc. made to the present disclosure within the spirit and principle of the present disclosure should be included in the scope of the present disclosure.

## Claims

1. A solar-powered heating device for an ultra-low temperature environment, comprising a heat insulation shell, wherein at least one solar heat-collecting panel is disposed outside the heat insulation shell, and a heated-liquid storage tank, a heat exchanger, a terminal supply system, a dual-heat-source heat pump auxiliary heating system, and a control cabinet are disposed within the heat insulation shell;
wherein a first inlet of the heated-liquid storage tank is connected to a liquid-supplying pipe of the solar heat-collecting panel, and a first outlet of the heated-liquid storage tank is connected to a liquid-returning pipe of the solar heat-collecting panel through a heat collection circulating pump;
wherein the terminal supply system takes liquid from a second outlet of the heated-liquid storage tank, adjusts a temperature of the liquid, through the heat exchanger, to obtain temperature-compliant liquid, and transmits the temperature-compliant liquid to a user side through a first liquid-circulating pump, and a liquid-returning pipe of the terminal supply system is connected to an inlet of the heat exchanger;
wherein an outlet of the dual-heat-source heat pump auxiliary heating system is connected to a liquid-supplying pipe on the user side, and an inlet of the dual-heat-source heat pump auxiliary heating system is connected to a liquid-returning pipe on the user side, wherein the dual-heat-source heat pump auxiliary heating system is configured to be activated when a temperature of the temperature-compliant liquid on the user side falls below a preset value; and
wherein the control cabinet is communicatively connected to the heated-liquid storage tank, the heat exchanger, the terminal supply system, and the dual-heat-source heat pump auxiliary heating system, respectively.

2. The solar-powered heating device according to claim 1, wherein the dual-heat-source heat pump auxiliary heating system comprises a compressor, a condenser, an expansion valve, a filter, a three-way valve, an air-cooled evaporator, and a water-cooled evaporator;
wherein the compressor, the condenser, the expansion valve, the filter, the three-way valve, and the air-cooled evaporator constitute a low-temperature air source heat pump;
wherein the compressor, the condenser, the expansion valve, the filter, the three-way valve, and the water-cooled evaporator constitute a water source heat pump;
wherein outlets of the low-temperature air source heat pump and the water source heat pump are connected to a first end of a liquid-supplying pipe of the dual-heat-source heat pump auxiliary heating system through a first electric control valve, and a second end of the liquid-supplying pipe of the dual-heat-source heat pump auxiliary heating system is provided with a terminal liquid-supplying interface; wherein inlets of the low-temperature air source heat pump and the water source heat pump are connected to a liquid outlet of the heat exchanger through a second liquid-circulating pump, and a liquid-returning pipe of the heat exchanger is connected to a terminal liquid-returning interface through a second electric control valve; wherein the terminal liquid-supplying interface and the terminal liquid-returning interface are connected to the user side; and
wherein the three-way valve is configured to switch between the air-cooled evaporator and the water-cooled evaporator; wherein when the temperature of the liquid stored in the heated-liquid storage tank is at a first range, the three-way valve is switched to the water-cooled evaporator; wherein when the temperature of the liquid stored in the heated-liquid storage tank is at a second range, the three-way valve is switched to the air-cooled evaporator; wherein a maximum value of the second range is less than a minimum value of the first range.

3. The solar-powered heating device according to claim 2, further comprising a first constant-pressure liquid-supplementing device and a second constant-pressure liquid-supplementing device;
wherein an inlet of the first constant-pressure liquid-supplementing device is connected to a first end of a first liquid-supplementing pipe, and an outlet of the first constant-pressure liquid-supplementing device is connected to an inlet of the first liquid-circulating pump; and
wherein an inlet of the second constant-pressure liquid-supplementing device is connected to a first end of a second liquid-supplementing pipe, and an outlet of the second constant-pressure liquid-supplementing device is connected to an inlet of the second liquid-circulating pump.

4. The solar-powered heating device according to claim 2, wherein a water flow sensor is disposed at an inlet pipe of the dual-heat-source heat pump auxiliary heating system, to detect whether the inlets of the low-temperature air source heat pump and the water source heat pump lack water.

5. The solar-powered heating device according to any one of claims 2-4, wherein each of the inlets and outlets of the first liquid-circulating pump and the second liquid-circulating pump is provided with a shock-absorbing soft joint; wherein each of the outlets of the first liquid-circulating pump and the second liquid-circulating pump is provided with a check valve or a silent one-way valve.

6. The solar-powered heating device according to claim 5, wherein liquid in the solar heat-collecting panel is heated to be high-temperature liquid and enters the heated-liquid storage tank through the liquid-supplying pipe of the solar heat-collecting panel; wherein the liquid stored in the heated-liquid storage tank is ethylene glycol solution, and the temperature of the liquid stored in the heated-liquid storage tank varies between 20 and 85 degrees.

7. The solar-powered heating device according to claim 6, further comprising a base, wherein the base has a frame structure formed by welding channel steel or I-shaped steel; wherein the base has fixing points corresponding to the heat insulation shell, the heated-liquid storage tank, the heat exchanger, the terminal supply system, the dual-heat-source heat pump auxiliary heating system, and the control cabinet, respectively; wherein each of the fixing points is provided with a mounting hole, through which a cross beam is fixed to the base.

8. The solar-powered heating device according to claim 7, wherein the heat insulation shell has an assembled frame structure and is detachably mounted on the base.

9. The solar-powered heating device according to claim 7, wherein the heat insulation shell is formed by assembling finished color steel plates having internal polyurethane foaming structure, and a back panel of the heat insulation shell is provided with a sealed insulated access door.

10. The solar-powered heating device according to claim 7, wherein the base is rectangular, and a side surface of each of two narrow edges of the base is provided with reinforcement cross beams; wherein two lifting lugs are welded on a top reinforcement cross beam of the reinforcement cross beams on the side surface of each of two narrow edges, to balance an overall hoisting weight of the heat insulation shell;
wherein two cross beams are welded at a center of gravity of the solar-powered heating device, along a longitudinal direction of the base, flush with a bottom surface of the base, for forklift loading and unloading.
